# EUROPÄISCHE PATENTSCHRIFT

(11) **EP 0 382 680 B1**
(45) Veröffentlichungstag und Bekanntmachung des Hinweises auf die Patenterteilung: **12.10.1994**
(21) Anmeldenummer: 90810070.4
(22) Anmeldetag: 30.01.1990
(51) Int. Cl.: H04L 9/00

(54) **Verfahren zum kryptographischen Behandeln von Daten und kryptographisches System**
Method for cryptographically processing data, and cryptographic system
Procédé de traitement cryptographique de données et système cryptographique

(30) Priorität: 08.02.1989 CH 429/89
(43) Veröffentlichungstag der Anmeldung: 16.08.1990
(73) Patentinhaber: Gretag Data Systems AG, CH-8105 Regensdorf (CH)
(72) Erfinder: Rabold, Peter, CH-8602 Wangen (CH); Klemenz, Hans-Jörg, CH-8108 Dällikon (CH); Schöbi, Paul Jakob, Dr., CH-8400 Winterthur (CH)
(74) Vertreter: Schwabe, Hans-Georg, Dipl.-Ing.

(56) Entgegenhaltungen:
- EP-A- 0 094 031
- FR-A- 2 446 568
- US-A- 3 627 928
- PROCEEDINGS OF THE 7th INTERNATIONAL CONFERENCE ON COMPUTER COMMUNICATION, Sydney, Elsevier Science Publishers, 30 Oktober 1984, Amsterdam, NL, Seiten 854-859; I.G. Graham et al.: "From chip to data network security unit"
- PATENT ABSTRACTS OF JAPAN vol. 10, no. 87 (E-393)(2144) 5 April 1986 & JP-A-60 230737

## Beschreibung

Die Erfindung betrifft ein Verfahren zum kryptographischen Behandeln von Daten gemäss Oberbegriff des Patentanspruches 1. Weiteres betrifft die Erfindung ein kryptographisches System gemäss Oberbegriff des Patentanspruches 15.

Verfahren und Systeme der eingangs erwähnten Art werden weltweit eingesetzt, um die Datenkommunikation zwischen zwei oder mehreren Anwendern vor dem Zugriff unbefugter Personen zu schützen. Waren es vorerst vornehmlich militärische Anwender, so verschiebt sich mittlerweile auf Grund von Datenschutzgesetzen und bekannt gewordenen Missbräuchen der Schwerpunkt der Anwender auf zivile Bereiche, beispielsweise aus dem Bankwesen und der Industrie. Es besteht ein berechtigtes Interesse daran, z.B. Informationen über geschäftliche Transaktionen oder wissenschaftliche Ergebnisse nur einem begrenzten autorisierten Personenkreis zugänglich zu machen. Bei vielen der bislang zu diesen Zwecken eingesetzten automatisierten kryptographischen Verfahren werden die in Datenpaketform vorliegenden Nutzdaten samt Datenübertragungsprotokollen kryptographisch behandelt und übermittelt. Die derart behandelten Datenpakete sind nur für kryptographische Systeme lesbar, welche mit den entsprechenden Schlüsseln ausgestattet sind, für andere dazwischengeschaltete Geräte bleibt der Inhalt der Nutzdaten verborgen, ja sie können nicht einmal die Struktur der einzelnen Datenpakete auflösen. Dies stellt aber ein Problem für moderne Datenübertragungssysteme, insbesondere für das geplante bzw. zum Teil schon in Betrieb befindliche flächendeckende dienstintegrierende Netz in digitaler Technik (ISDN - Integrated Services Digital Network) dar, welches die getrennten Fernmeldenetze für die unterschiedlichen Kommunikationsformen (Sprach-, Text-, Bild- und Datendienste) zu einem öffentlichen Uebertragungssystem zusammenfasst. Bei der Konzipierung dieses und ähnlicher integrierender Systeme wurde in den Normen für die Datenübertragungsprotokolle keine Rücksicht auf kryptographische Verfahren genommen. Andererseits benötigen aber zwischengeschaltete Uebertragungseinrichtungen (Satelliten, Remultiplexer, Vermittlungszentralen, etc.) Information über die in den Datenübertragungsprotokollen enthaltene Struktur der übertragenen Datenpakete.

In der Vergangenheit wurde daher auch schon vorgeschlagen, nur die Nutzdaten kryptographisch zu behandeln. In einem Artikel in "Proceedings of the seventh international conference on computer communication", Sydney, 30th October - 2nd November 1984, pages 854-859, Elsevier Science Publishers B.V., Amsterdam, NL schreiben die Autoren I.G. Graham et al., dass es bei der Byte-synchronisierten Uebertragung notwendig ist, die Synchronisierinformation in den Kopfdaten in Klartext zu belassen. Es wird auch erwähnt, dass am Ende des Datenpakets eine Informationssequenz an den Empfänger übermittelt werden muss, so dass dieser den Entschlüsselungsvorgang stoppt und in den Klarbetrieb zurückkehrt. Dem Empfänger muss also mitgeteilt werden, wann eine Uebertragung beginnt und wann sie beendet ist.

Bei dem in den Patent Abstracts of Japan, Vol. 10, No. 87 (E-393)[2144], 5th April 1986 bzw. in JP-A-60 230 737 beschriebenen Verfahren wird ein ganzes Datenpaket einerseits kryptographisch behandelt und andererseits auch klar durchgelassen. Ein getakteter Multiplexer sorgt für eine korrekte Mischung von Klardaten und Kryptodaten. Insbesondere werden die Datenbits 0-31 Klar übermittelt, wobei eine Kryptogrammumwandlung stattfindet, um sicherzustellen, dass in den Kryptodaten keine bits < 32 enthalten sind. Nur dann kann ein synchroner Empfang installiert werden. Dieses Verfahren eignet sich für Uebertragungen innerhalb eines bestimmten Datenformats. Bei Wechsel des Datenformats, beispielsweise bei Uebertragungen von Europa nach USA, kommt der Empfänger ausser Tritt und eine sinnvolle Entschlüsselung der Kryptodaten ist nicht mehr möglich.

In der EP-A-94,031 (US-A-4,661,657) ist ein Verfahren zur blockweisen Uebertragung von Kryptodaten beschrieben, bei dem es möglich ist, Nutzdaten durch Steuerdaten zu substituieren.

In der FR-A-2,446,568 ist beschrieben, dass bei einer Uebertragung von Paket-Daten, die Signalisierbytes zu Anfang und zu Ende der Uebermittlung klar gesendet werden müssen. Nur so kann dem Empfänger mitgeteilt werden, dass eine Uebertragung beginnt bzw. endet.

Schliesslich wird in den US-A-3,627,928 ein kryptographisches System zur Anwendung bei Teleprintern beschrieben. Bei dieser Art der kryptographischen Datenübermittlung sind das Startbit und das Stopbit länger als die Datenbits. Diese werden Klar übermittelt und vom Empfänger erkannt.

Allen den genannten Verfahren ist gemeinsam, dass sie auf Datenformate anwendbar sind, die eindeutig erkennbare Anfangs- bzw. Endinformationen enthalten. Diese sind beispielsweise eine Serie von sogenannten "flags", die zu Anfang einer Uebermittlung (z.B. X.25 Protokoll) gesendet werden und dem Empfänger eine Synchronisation erlauben; eine andere Form stellen beispielsweise Start- und Stopbits dar, die eine von den Datenbits verschiedene Länge haben. Bei diesen Datenformaten besteht immer eine Abhängigkeit zwischen den Nutzdaten und den Steuerdaten, sodass in einem kryptographischen System immer darauf Rücksicht genommen werden muss, dass beispielsweise eine CRC (cyclic redundancy check) Information nach der kryptographischen Behandlung der Nutzdaten neu gerechnet werden muss. Bei Datenformaten, die von dieser Struktur abweichen, beispielsweise bei Rahmenformaten, versagen diese Verfahren.

Aus dem Artikel "Proceedings of the Seventh International Conference on Computer Communication", Sydney, Elsevier Science Publishers B.V., 30. Oktober 1984, Amsterdam, NL, Seiten 854-859; I.G. Graham et al.: "From Chip to Data Network Security Unit", ist ein Verfahren zum kryptographischen Behandeln von Daten gemäß dem Oberbegriff des Patentanspruchs 1 bekannt, das bei einer Verschlüsselung bzw. einer Entschlüsselung von Datenmengen bzw. Schlüsseltextmengen den Klartext bzw. den Kryptotext und Datenübertragungsprotokolle enthält und wobei die den Klartext bzw. den Kryptotext begleitenden Datenübertragungsprotokolle erfaßt werden, um lediglich die isolierten Klartext- bzw. Kryptotextdaten zu chiffrieren bzw. zu dechiffrieren und zu übertragen.

Dieses Verfahren ist jedoch relativ zeitaufwendig und umständlich, da die Isolierung der nicht für die Übertragung gedachten Datenübertragungsprotokolle und die Chiffrierung bzw. Dechiffrierung in einem Schritt sequentiell durchgeführt werden.

Es besteht daher die Aufgabe ein kryptographisches Verfahren und System bereitzustellen, so dass vorstehende Probleme gelöst werden. Insbesondere sollen Datenpakete kryptographisch derart behandelt werden, dass die in beliebigen Datenübertragunsprotokollen enthaltene Information über die Struktur und das Format der Datenpakete für zwischen den kommunizierenden kryptographischen Systemen angeordnete, zur Datenübertragung nötige Geräte lesbar bleibt. Zugleich soll eine einfache Möglichkeit bereitgestellt werden, die Nutzdaten durch Protokolldaten zu ersetzen, welche beispielsweise dem Schlüsselaustausch dienen. Insbesondere aber soll ein Verfahren und ein kryptographisches System geschaffen werden, welches einen einfachen kryptographischen Teil aufweist, der unabhängig vom verwendeten Datenformat ist und auf jedes Datenformat anwendbar ist.

Diese Aufgabe wird erfindungsgemäss durch ein durch die Merkmale des Patentanspruches 1 beschriebenes Verfahren und ein durch die Merkmale des Patentanspruches 15 beschriebenes kryptographisches System gelöst. Bevorzugte Varianten sind Gegenstand der abhängigen Patentansprüche.

Im folgenden wird die Erfindung anhand der schematischen Zeichnungen näher erläutert.
Es zeigen:
- Fig. 1: ein Blockschema eines beispielsweisen Aufbaus des erfindungsgemässen kryptographischen Systems,
- Fig. 2: ein Blockschaltbild der wesentlichsten Funtionselemente eines Ausführungsbeispiels des erfindungsgemässen kryptographischen Systems,
- Fig. 3: die Struktur eines standardisierten Datenpaketes am Beispiel des PCM-30 Formats und
- Fig. 4: ein Zeitablaufdiagramm für den Ver-/Entschlüsselungsbetrieb gemäss der Erfindung.

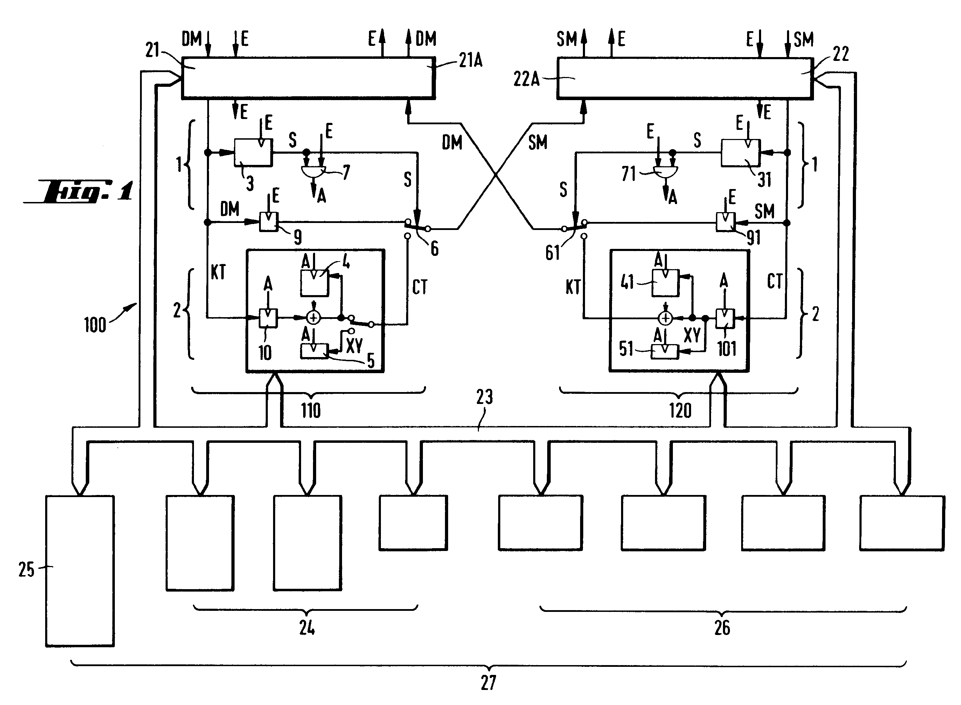

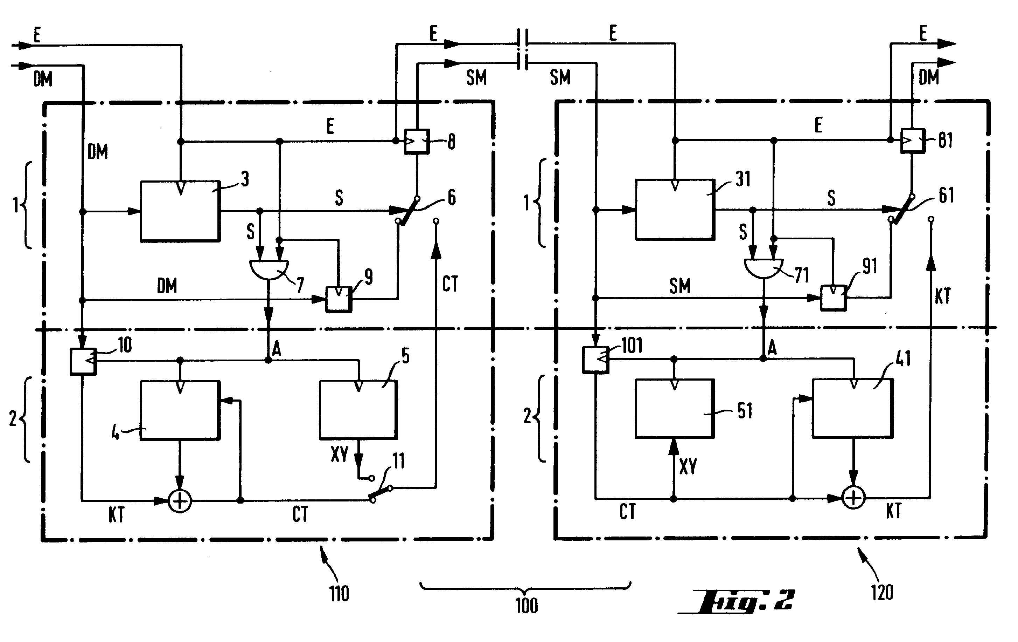

Das Ausführungsbeispiel des kryptographischen Systems 100 umfasst gemäss Fig. 1 und Fig. 2 eine getrennte Verschlüsselungs- und Entschlüsselungseinheit 110 und 120. Diese Wahl des Aufbaus ist jedoch nur beispielsweise zu sehen, gleichwohl könnte das kryptographische System 100 unter Verwendung geeigneter Einzelbauteile einteilig ausgebildet sein. In Fig. 2 sind nur die erfindungswesentlichen Bestandteile des kryptographischen Systems 100 und deren blockweise Verknüpfung dargestellt. Bevor anhand der Fig. 1 und 2 das erfindungsgemässe Verfahren und das kryptographische System 100 näher erläutert werden, ist es zweckmässig die Struktur von Datenpaketen zu betrachten.

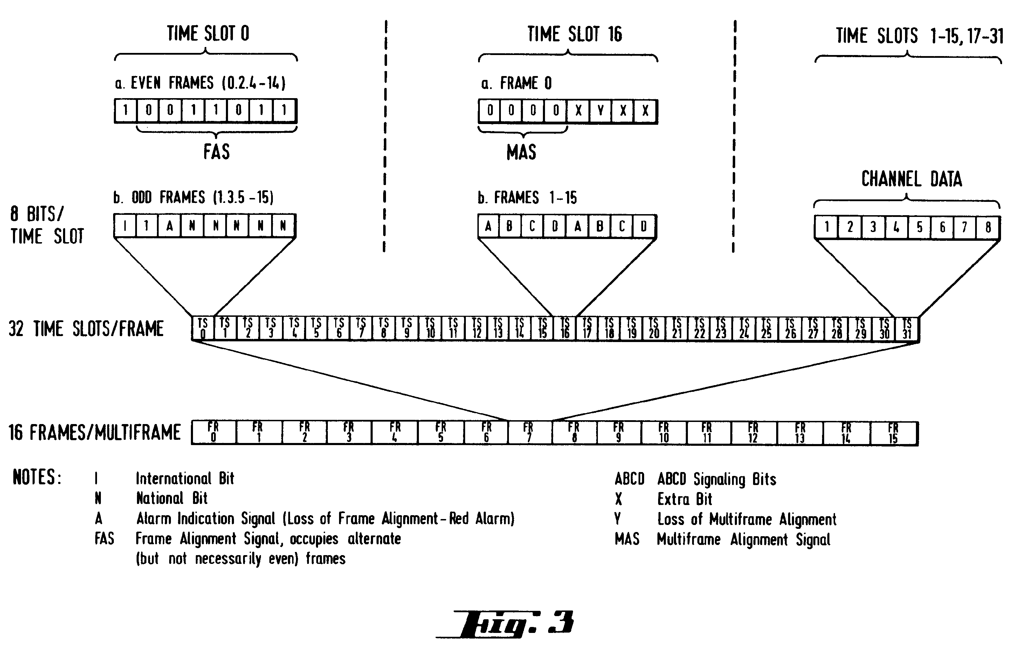

In Fig. 3 ist der Aufbau eines standardisierten Datenpaketes für öffentliche Uebertragunssysteme am Beispiel des PCM-30 Formats dargestellt. Dieses Format stellt einen europaweiten Standard gemäss den Empfehlungen des CCITT (Comité Consultatif International Télégraphique et Téléphonique) dar. Gemäss dieser CCITT-Empfehlung (im speziellen G.704) erfolgt die Datenübertragung innerhalb eines festgelegten Rahmens, welcher in 32 Zeitschlitze (Kanäle) zu je 8 Bit aufgeteilt ist. Ferner werden 16 solcher Rahmen zu einem Ueberrahmen zusammengefasst. Die Zeitschlitze eines Rahmens sind von 0 bis 31 durchnumeriert, wobei die Zeitschlitze 1 bis 15 und 17 bis 31 für Nutzdaten zur Verfügung stehen, die Zeitschlitze 0 und 16 jedoch Kontrolldaten enthalten. Zeitschlitz 0 insbesondere enthält das Rahmensynchronwort, das Ueberrahmensynchronwort, das sogenannte CRC-4 Prüfwort zur übertragungsbedingten Fehlererkennung und diverse weitere Kontrollbits. Zeitschlitz 16 enthält die Signalisierinformation für die einzelnen Nutzdatenkanäle.

Die nominale Uebertragungsrate beträgt 2048 kBit/s, wobei auf jeden einzelnen Kanal eine Datenrate von 64 kBit/s entfällt. Die effektive Nutzdaten-Uebertragungsrate beträgt somit 1920 kBit/s.

Ursprünglich wurde das PCM-30 Format zur Uebertragung von pulscodemodulierten Sprachsignalen in der Telephonie verwendet. In einen PCM-Rahmen konnten dabei 30 Telephonkanäle von verschiedenen Teilnehmern einzeln codiert und danach zusammen digital übertragen werden. Die individuelle Vermittlung jedes einzelnen Kanales im digitalen PCM-Netz erfolgte dabei durch die Signalisierinformation im Zeitschlitz 16. In heutigen Anwendungen wird jedoch vermehrt die ganze Nutzdatenbitrate von 1920 kBit/s von einem einzigen Teilnehmer benutzt. Dabei handelt es sich meist um rein digitale Daten (Computer-Daten) oder um gemischte, digitale und PCM-codierte Daten (Video-conferencing etc.). Der Zeitschlitz 16 enthält dann die Signalisierinformation zur Vermittlung der gesamten Nutzdaten innerhalb des Rahmens.

Im folgenden wird die Gesamtheit all dieser zusätzlich zu den Nutzdaten in einem Datenpaket enthaltenen Informationen als Datenübertragungsprotokolle bezeichnet.

In Fig. 1 und detaillierter in Fig. 2 ist in der linken Hälfte der Figur die Verschlüsselungseinheit 110 und in der rechten Hälfte die Entschlüsselungseinheit 120 des beispielsweise zweiteilig aufgebauten kryptographischen Systems 100 dargestellt.

Im Verschlüsselungsbetrieb wird eine Datenmenge DM, welche die Nutzdaten in Form von Klartext KT und dazu die Datenübertragungsprotokolle PR enthält, in Paketform zusammen mit dem vorzugsweise symmetrischen Eingangstakt E über die eingangsseitige Klartextschnittstelle 21 in die Verschlüsselungseinheit 110 des kryptographischen Systems 100 eingespeist. In einer ersten Ebene 1 des kryptographischen Systems 100, welche im Eingangstakt E getaktet ist, wird die Datenmenge DM einer Rahmenerkennungsschaltung 3 zugeführt. Als Rahmenerkennungsschaltung 3 kommt beispielsweise ein integrierter Schaltkreis T1/CEPT(PCM-30) der Fa. Rockwell International zum Einsatz. Seine Funktionsweise ist in einem Firmenprospekt No. 29300N10, Order No. 310, March 1987 beschrieben. Ein weiterer einnetzbarer integrierter Schaltkreis zur Rahmenerkennung ist der MJ 1472 der Fa. Plessey Semiconductors. Die Rahmenerkennungsschaltung 3 ist in der Lage, die Datenübertragungsprotokolle PR innerhalb der Datenmenge DM zu detektieren. Immer wenn sie Datenübertragungsprotokolle innerhalb der Datenmenge DM erkennt, erzeugt die Rahmenerkennungsschaltung 3 ausgangsseitig ein Steuersignal S. Dieses Steuersignal S wird gemeinsam mit dem Eingangstakt E den Eingängen eines "UND"-Verknüpfungsgliedes 7 zugeführt, welches gleichfalls in der ersten Ebene 1 des kryptographischen Systems 100 angeordnet ist. Im "UND"-Verknüpfungsglied 7 wird aus dem Steuersignal S und dem Eingangstakt E ein neuer Arbeitstakt A erzeugt, wobei gilt A = E·S. (Das Zeichen "·" steht dabei für die UND-Verknüpfung). Der Arbeitstakt A ist massgebend für den Betrieb der in einer zweiten Ebene 2 des kryptographischen Systems 100 angeordneten weiteren Funktionselemente. Er ist verschieden vom Eingangstakt E und üblicherweise bei symmetrisch gewähltem Eingangstakt E asymmetrisch.

Die Datenmenge DM wird einerseits in der ersten Ebene 1 des kryptographischen Systems 100 im Takt des Eingangstaktes E weitergeleitet und andererseits einem in der zweiten Ebene 2 angeordneten ersten Flip-Flop-Element 10 zugeführt. Dieses erste Flip-Flop-Element 10 wird im Takt des vom "UND"-Verknüpfungsgliedes 7 erzeugten Arbeitstaktes A betrieben. Demgemäss kann die Datenmenge DM das erste Flip-Flop-Element 10 nur im "ENABLE" Zustand passieren, was dann der Fall ist, wenn Klartext KT anliegt. Auf diese Weise wird der Klartext KT aus der Datenmenge DM herausgefiltert und im Takt des Arbeitstaktes A in der zweiten Ebene 2 des kryptographischen Systems 100 zu einem Chiffriergenerator 4 weitergeleitet. Im Fall einer einteiligen Ausbildung des kryptographischen Systems 100 ist an Stelle des separaten Chiffriergenerators 4 ein Chiffrier-/Dechiffriergenerator angeordnet. Hier erfolgt die eigentliche bitweise Verschlüsselung des Klartextes. Der Chiffriergenerator 4 wird ebenfalls mit dem Arbeitstakt A betrieben. Auf diese Weise wird verhindert, dass die über das erste Flip-Flop-Element 10 eingetakteten einzelnen bits des Klartextes KT unterschiedlich oft verschlüsselt werden.

Die Verschlüsselung erfolgt nach den üblichen Verfahren, beispielsweise unter Anwendung einer Exklusiv- Oder - Verknüpfung mit einer Schlüsselsequenz (Stream Cipher) oder mit Block-Ciphers im ECB (Electronic-Code-Book)-, CFB (Cipher-Feed-Back)- oder CBC (Cipher-Block-Chaining)-mode. Als Algorithmen können neben anderen beispielsweise DES (Data Encryption Standard)- oder auch Public-Key-Verfahren verwendet werden. Aus Gründen der Betriebssicherheit werden vorzugsweise selbstsynchronisierende Verfahren angewendet wie beispielsweise selbstsynchronisierende Stream Ciphers oder Block Ciphers im 1.Bit-CFB-Mode.

Nach erfolgter Verschlüsselung des Klartextes KT liegt dieser in Form von Kryptodaten CT vor, welche wieder an die erste Ebene 1 des kryptographischen Systems 100 weitergeleitet werden. In der ersten Ebene 1 werden die Kryptodaten CT und die Datenmenge DM einer 2:1 Multiplexereinheit 6 zugeführt. In dieser Multiplexereinheit 6 wird der Klartext KT innerhalb der Datenmenge DM bitweise durch die von der zweiten Ebene 2 des kryptographischen Systems 100 gelieferten Kryptodaten CT ersetzt. Ein im Eingangstakt E betriebenes zweites Flip-Flop-Element 9 in der ersten Ebene 1 sorgt für das bitgenaue Anliegen der Datenmenge DM an der Multiplexereinheit 6. Auf diese Weise ist sichergestellt, dass die Verknüpfung der Datenübertragungsprotokolle PR mit den Kryptodaten CT zur Schlüsseltextmenge SM auf korrekte Weise erfolgt, das heisst, dass die Datenübertragungsprotokolle PR in der Schlüsseltextmenge SM die gleichen bits einnehmen wie in der ursprünglichen Datenmenge DM. In weiterer Folge wird die Schlüsseltextmenge SM über ein drittes Flip-Flop-Element 8 zu einer ausgangsseitigen Kryptodatenschnittstelle 22A geleitet. Das dritte Flip-Flop-Element 8 wird im Eingangstakt E betrieben und dient zur bitgenauen Positionierung der auszugebenden Schlüsseltextmenge SM in der Kryptodatenschnittstelle 22.

Da durch dieses 2 Ebenen-Konzept des kryptographischen Systems 100 in der zweiten Ebene 2 der Klartext KT getrennt von den Datenübertragungsprotokollen PR vorliegt, ist es auf einfache Weise möglich, den Klartext KT durch Protokolldaten XY zu ersetzen, welche beispielsweise zum elektronischen Schlüsselaustausch (Public Key Exchange Verfahren) zwischen der Chiffriereinheit 110 und der Dechiffriereinheit 120 zweier miteinander in Verbindung stehender kryptographischer Systeme 100 benutzt werden. Dazu wird durch Betätigen eines Schalters 11 wahlweise anstatt des Chiffriergenerators 4 ein Protokollgenerator 5 aktiviert, welcher in der zweiten Ebene 2 des kryptographischen Systems 100 angeordnet ist und gleichfalls im Arbeitstakt A betrieben wird. Auf diese Weise werden statt der Kryptodaten CT die Protokolldaten an die erste Ebene 1 weitergeleitet und in der 2:1 Multiplexeinheit 6 mit den Datenübertragungsprotokollen PR verknüpft.

Der Entschlüsselungsbetrieb verläuft analog zum Verschlüsselungsbetrieb. Ueber eine eingangsseitige Kryptodatenschnittstelle 22 wird die Schlüsseltextmenge SM, welche die Kryptodaten CT und die Datenübertragungsprotokolle PR enthält, zusammen mit dem Eingangstakt E einer ersten Ebene 1 der Entschlüsselungseinheit 120 des kryptographischen Systems 100 zugeführt. Eine Rahmenerkennungsschaltung 31 detektiert wiederum die Datenübertragungsprotokolle PR innerhalb der Schlüsseltextmenge SM und generiert ein Steuersignal 5, welches in einem "UND"-Verknüpfungsglied 71 mit dem Eingangstakt E wiederum zu einem Arbeitstakt A verknüpft wird. Dieser Arbeitstakt A ist massgebend für den Betrieb der in der zweiten Ebene 2 der Entschlüsselungseinheit 120 des kryptographischen Systems 100 angeordneten Funktionselemente, einen Dechiffriergenerator 41, ein erstes Flip-Flop-Element 101 und einen Protokollgenerator 51. Im ersten Flip-Flop-Element 101 erfolgt wiederum eine Trennung der Kryptodaten CT von der Schlüsseltextmenge SM. Die Kryptodaten CT werden daraufhin im Dechiffriergenerator 41 entschlüsselt und in Form von Klartext KT an die erste Ebene 1 des kryptographischen Systems 100 weitergeleitet. Dort werden sie in einer 2:1 Multiplexereinheit 61 gegen die Kryptodaten CT ausgetauscht, wobei ein zweites Flip-Flop-Element 91 für die bitgenaue Kombination der Datenübertragungsprotokolle PR mit dem Klartext KT zur Datenmenge DM sorgt. Ueber ein weiteres Flip-Flop-Element 81 wird die Datenmenge DM daraufhin bitgenau an eine ausgangsseitige Klartextschnittstelle 21A weitergeleitet.

Für den Fall, dass die Schlüsseltextmenge SM anstatt der Kryptodaten CT die Protokolldaten XY enthält, werden diese von einem Protokollempfänger 51 detektiert und ausgewertet.

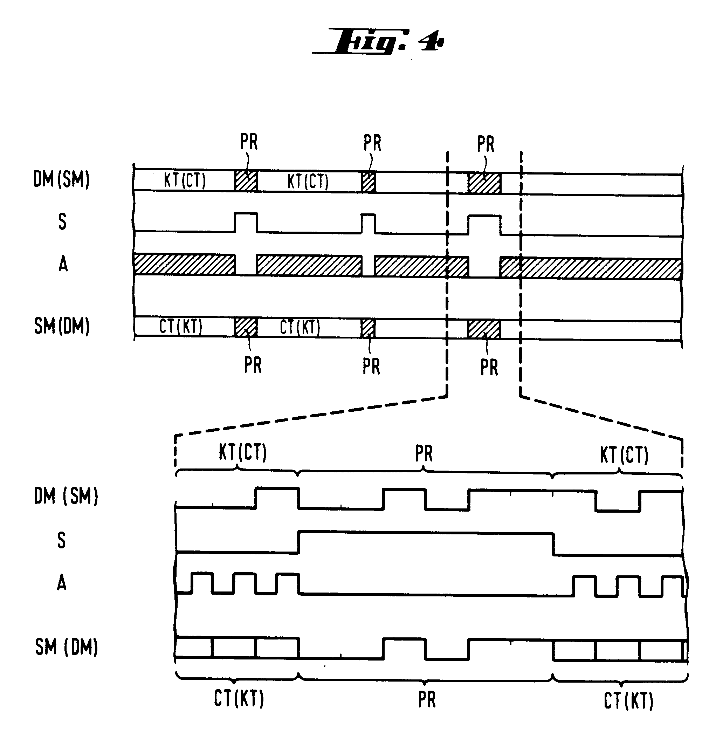

In Fig. 4 ist zur weiteren Erläuterung ein zeitgenaues Ablaufdiagramm für den Ver-/Entschlüsselungsbetrieb dargestellt. Die Datenmenge DM bzw. die Schlüsseltextmenge SM ist aus Datenübertragungsprotokollen PR und Klartext KT bzw. Kryptodaten CT zusammengesetzt. Im Fall der Uebermittlung von Protokolldaten XY stehen diese an Stelle des Klartextes KT bzw. der Kryptodaten CT. Immer wenn die Rahmenerkennungsschaltung 3,31 Datenübertragungsprotokolle PR detektiert, generiert sie ein Steuersignal S. Dieses Steuersignal S wird zusammen mit dem Eingangstakt E zu einem Arbeitstakt A verknüpft, welcher im Falle eines symmetrisch gewählten Eingangstaktes E üblicherweise asymmetrisch ist. Nach Verschlüsselung des Klartextes KT bzw. Entschlüsselung der Kryptodaten werden die behandelten Daten zur Schlüsseltextmenge SM bzw. zur Datenmenge DM verknüpft. Ausgangsseitig stehen dabei die Kryptodaten CT an der Stelle des eingangsseitigen Klartextes KT und umgekehrt. Die Datenübertragungsprotokolle PR werden nicht verändert und sind eingangs- und ausgangsseitig bitgenau gleich plaziert.

Das erfindungsgemässe kryptographische System umfasst auch externe Bedienungselemente, welche über einen Datenbus 23 mit der Verschlüsselungs- bzw. der Entschlüsselungseinheit 110 bzw. 120 in Verbindung stehen, wie in Fig. 1 angedeutet. Die Steuerung des gesamten kryptographischen Systems erfolgt über ein Mikrokontrollsystem 27. Dieses Mikrokontrollsystem umfasst eine zentrale Recheneinheit 25 mit Speicher 24 und Peripherie 26 wie z.B. Anwender-Schnittstellen.

Das Verfahren und das kryptographische System gemäss der Erfindung erlaubt eine getrennte, automatisierte kryptographische Behandlung von Nutzdaten in Form von Klartext oder Kryptodaten. Die Datenübertragungsprotokolle, welche die Information über die Struktur der Datenpakete aufhalten, passieren das kryptographische System 100 unverändert und bleiben ein- und ausgangsseitig bitgenau in den Datenpaketen plaziert. Auf diese Weise sind zwischen zwei miteinander kommunizierenden kryptographischen Systemen angeordnete Datenübertragungseinrichtungen in der Lage die benötigte Information über die Datenstruktur zu extrahieren, Kryptodaten bleiben ihnen aber nach wie vor verborgen. Zugleich erlaubt die getrennte kryptographische Behandlung des Klartextes bzw. der Kryptodaten ein einfaches Ersetzen dieser Nutzdaten durch Protokolldaten, die beispielsweise dem Schlüsselaustausch dienen.

## Patentansprüche

1. Verfahren zum kryptographischen Behandeln von Daten, wobei eine Klartext (KT) und Datenübertragungsprotokolle (PR) enthaltende Datenmenge (DM) bzw. eine Kryptodaten (CT) und Datenübertragungsprotokolle (PR) enthaltende Schlüsseltextmenge (SM) in Paketform einem kryptographischen System (100) zugeführt wird, welches mindestens einen Chiffrier-/Dechiffriergenerator (4, 41) umfaßt und ausgangsseitig Signale erzeugt, welche die Kryptodaten (CT) bzw. die Klardaten (KT) enthalten, wobei die Schlüsseltextmenge bzw. die Datenmenge in zwei Ebenen (1, 2) verarbeitet werden, wobei in der ersten Ebene (1) die Datenübertragungsprotokolldaten (PR) innerhalb der Datenmenge (DM) bzw. der Schlüsseltextmenge (SM) detektiert werden, dadurch **gekennzeichnet**, daß in der ersten Ebene (1) des kryptographischen Systems (100), welche im Eingangstakt E getaktet ist, die Datenmenge (DM) bzw. Schlüsseltextmenge einer Rahmenerkennungsschaltung (3) zugeführt wird, die bei Erkennen von Datenübertragungsprotokollen innerhalb der Datenmenge (DM) bzw. Schlüsseltextmenge ausgangsseitig ein Steuersignal (S) erzeugt, wobei aus dem Steuersignal (S) und dem Eingangstakt (E) ein neuer Arbeitstakt (A) erzeugt wird, der die zweite Ebene (2) des kryptographischen Systems (100) taktet, so daß die Datenmenge (DM) nur zu der zweiten Ebene gelangt, wenn Klartext (KT) anliegt bzw. Schlüsseltextmenge, wenn Kryptodaten anliegen, wodurch in der zweiten Ebene (2) nur der Klartext (KT) bzw. die Kryptodaten (CT) von dem mindestens einen Chiffrier-/Dechiffriergenerator (4) behandelt wird bzw. werden, und daß der nach der Behandlung als Kryptodaten (CT) vorliegende Klartext (KT) bzw. die als Klartext (KT) vorliegenden Kryptodaten (CT) im Eingangstakt (E) derart mit den unveränderten Datenübertragungsprotokollen (PR) verknüpft wird, daß als ausgangsseitige Signale des kryptographischen Systems (100) im Verschlüsselungsbetrieb die Schlüsseltextmenge (SM) bzw. im Entschlüsselungsbetrieb die Datenmenge (DM) erzeugt wird.

2. Verfahren nach Anspruch 1, dadurch gekennzeichnet, dass das Erkennen der Datenübertragungsprotokolle (PR) in einer Rahmen-Erkennungsschaltung (3,31) erfolgt, wobei ein Steuersignal (S) erzeugt wird, welches dazu dient den mindestens einen Chiffrier-/Dechiffriergenerator (4,41) von Chiffrier-/Dechiffrierbetrieb auf Klarbetrieb umzuschalten.

3. Verfahren nach Anspruch 2, dadurch gekennzeichnet, dass die erste Ebene (1) des kryptographischen Systems (100) im Takt eines Eingangstaktes (E) betrieben wird, und dass ein Arbeitstakt (A) für die zweite Ebene (2) des kryptographischen Systems (100) durch eine logische "UND" Verknüpfung des Eingangstaktes (E) mit dem Steuersignal (S) erzeugt wird.

4. Verfahren nach Anspruch 3, dadurch gekennzeichnet, dass der Einganstakt (E) symmetrisch gewählt wird.

5. Verfahren nach einem der Ansprüche 2 bis 4, dadurch gekennzeichnet, dass einerseits die unveränderte Datenmenge (DM) bzw. die unveränderte Schlüsseltextmenge (SM) innerhalb der ersten Ebene (1) des kryptographischen Systems (100) weitergeleitet wird und andererseits innerhalb der zweiten Ebene (2) des kryptographischen Systems (100) der Klartext (KT) bzw. die Kryptodaten (CT) weitergeleitet werden.

6. Verfahren nach Anspruch 5, dadurch gekennzeichnet, dass das Ausfiltern des Klartextes (KT) aus der Datenmenge (DM) bzw. der Kryptodaten (CT) aus der Schlüsseltextmenge (SM) durch Betreiben eines ersten Flip-Flop-Elementes (10,101) im Arbeitstakt (A) erfolgt, welches in der zweiten Ebene (2) des kryptographischen Systems (100) angeordnet ist.

7. Verfahren nach Anspruch 5 oder 6, dadurch gekennzeichnet, dass die Datenmenge (DM) bzw. die Schlüsseltextmenge (SM) im Takt des Eingangstaktes (E) durch die erste Ebene (1) des kryptographischen Systems (100) geleitet wird.

8. Verfahren nach einem der Ansprüche 5 bis 7, dadurch gekennzeichnet, dass der Klartext (KT) bzw. die Kryptodaten (CT) im Takt des Arbeitstaktes (A) durch die zweite Ebene (2) des kryptographischen Systems (100) geleitet werden.

9. Verfahren nach einem der Ansprüche 3 bis 8, dadurch gekennzeichnet, dass der mindestens eine Chiffrier-/Dechiffriergenerator (4,41) im Takt des Arbeitstaktes (A) betrieben wird.

10. Verfahren nach einem der Ansprüche 1 bis 9, dadurch gekennzeichnet, dass die Verknüpfung des nach der Behandlung als Kryptodaten (CT) vorliegenden Klartextes (KT) bzw. der als Klartext (KT) vorliegenden Kryptodaten (CT) mit den Datenübertragungsprotokollen (PR) in einer 2:1 Multiplexereinheit (6,61) erfolgt, welche innerhalb der ersten Ebene (1) des kryptographischen Systems (100) angeordnet ist.

11. Verfahren nach Anspruch 10, dadurch gekennzeichnet, dass die Verknüpfung bitweise erfolgt, und dass bit für bit des Klartextes (KT) bzw. der Kryptodaten (CT) der unveränderten Datenmenge (DM) bzw. der Schlüsseltextmenge (SM) durch Kryptodaten (CT) bzw. Klartext (KT) ersetzt wird.

12. Verfahren nach Anspruch 11, dadurch gekennzeichnet, dass die bitmässig richtige Verknüpfung der Kryptodaten (CT) bzw. des Klartextes (KT) mit den Datenübertragungsprotokolle (PR) durch Betreiben eines zweiten Flip-Flop-Elementes (9,91) im Eingangstakt (E) erfolgt, welches in der ersten Ebene (1) des kryptographischen Systems (100) angeordnet ist.

13. Verfahren nach einem der Ansprüche 1 bis 12, dadurch gekennzeichnet, dass der Klartext (KT) durch Protokolldaten (XY), beispielsweise Schlüsselaustauschinformationen, eines Protokollgenerators (5,51) ersetzt wird, welcher innerhalb der zweiten Ebene (2) des kryptographischen Systems (100) angeordnet ist und bei Bedarf wahlweise anstatt des mindestens einen Chiffrier-/Dechiffriergenerators (4,41) aktivierbar ist und im Takt des Arbeitstaktes (A) betrieben wird.

14. Verfahren nach einem der vorhergehenden Ansprüche, dadurch gekennzeichnet, dass zum Ver- bzw. Entschlüsseln ein selbstsynchronisierendes Verfahren angewendet wird.

15. Kryptographisches System zum Verschlüsseln von Klartext (KT) bzw. zum Entschlüsseln von Kryptodaten (CT), mit einer Klartextschnittstelle (21, 21A) und einer Kryptodatenschnittstelle (22, 22A) und mindestens einem Chiffrier-/Dechiffriergenerator (4,41), dadurch gekennzeichnet, dass das kryptographische System (100) zweistufig aufgebaut ist, wobei eine erste Ebene (1) des kryptographischen Systems (100), eine Rahmenerkennungsschaltung (3,31) und eine 2:1 Multiplexereinheit (6,61) umfasst, und in einer zweiten Ebene (2) des kryptographischen Systems (100) neben dem mindestens einen Chiffrier-/Dechiffriergenerator (4,41) ein Protokollgenerator (5) und ein Protokollempfänger (51) angeordnet sind, welche der Uebermittlung von Protokolldaten (XY), beispielsweise zum Schlüsselaustausch zwischen kommunizierenden Systemen dienen.

16. Kryptographisches System nach Anspruch 15, dadurch gekennzeichnet, dass in der ersten Ebene (1) ein "UND" Verknüpfungsglied (7,71) angeordnet ist, welches aus einem für die erste Ebene (1) massgeblichen Eingangstakt (E) und einem von der Rahmenerkennungsschaltung (3,31) erzeugten Steuersignal (S) einen Arbeitstakt (A) für Funktionselemente der zweiten Ebene (2) des kryptographischen Systems (100) erzeugt, welcher verschieden ist vom Eingangstakt (E).

17. Kryptographisches System nach Anspruch 15 oder 16, dadurch gekennzeichnet, dass in der zweiten Ebene (2) des kryptographischen Systems (100) ein erstes Flip-Flop-Element (10,101) angeordnet ist, welches im Takt des Arbeitstaktes (A) betreibbar ist.

18. Kryptographisches System nach einem der Ansprüche 15 bis 17, dadurch gekennzeichnet, dass in der ersten Ebene (1) des kryptographischen Systems (100) ein zweites Flip-Flop-Element (9,91) angeordnet ist, welches im Takt des Eingangstaktes (E) betreibbar ist.

19. Kryptographisches System nach einem der Ansprüche 15 bis 18, dadurch gekennzeichnet, dass in der zweiten Ebene (2) des kryptographischen Systems (100) ein Wechselschalter (11) angeordnet ist, mittels welchen wahlweise entweder der Chiffrier-/Dechiffriergenerator (4,41) oder der Protokollgenerator (5) aktivierbar ist.

20. Kryptographisches System nach einem der Ansprüche 15 bis 19, dadurch gekennzeichnet, dass es getrennte Verschlüsselungs- (110) und Entschlüsselungseinheiten (120) umfasst, mit einem separaten Chiffrier-bzw. Dechiffriergenerator (4 bzw. 41).

## Claims

1. Process for cryptographic handling of data , whereby a data stream containing a clear text (KT) and data transmission protocol (PR), or an encrypted text stream SM containing cryptodata (CT) and data transmission protocol (LR) resp. is fed in packet form to a cryptographic system (100), which contains at least one encryption/decryption generator (4, 41) and generates signals on the output side which contain the cryptodata (CT) or clear text data (KT) resp., whereby the encrypted text stream or data stream is processed in two levels (1,2), whereby in the first level (1) the data transmission protocols (PR) are detected within the data stream (DM) or encrypted text stream (SM) resp., characterised in that in the first level (1) of the cryptographic system (100), which is clocked at the input rate E, the data stream (DM) or encrypted text stream resp. is fed to a frame detection circuit (3), which generates a control signal (S) on the output side on detection of data transmission protocols within the data stream (SM) or encrypted text stream resp., whereby a new clock signal (A) is generated from the control signal (S) and the input clock (E), which clocks the second level (2) of the cryptographic system (100), so that the data stream (DM) only reaches the second level if there is clear text (KT) present, or the encrypted data stream, when there is cryptodata present, so that in the second level (2) only the clear text (KT) or the cryptodata (CT) resp. is handled by the at least one encryption/decryption generator (4), and that after the clear text (KT) present after the treatment as cryptotodata (CT) or resp. the cryptodata (CT) present as clear text (KT) is so combined with the unchanged data transfer protocols (PR) at the input clock rate (E) that as output signals from the cryptographic system (100) in encryption mode, the encrypted text stream (SM) or in decryption mode the data stream (DM) resp. is generated.

2. Process according to claim 1, characterised in that the detection of the data transmission protocol (PR) is carried out in a frame detection circuit (3,31), whereby a control signal (S) is generated, which serves to switch over the at least one encryption/decryption generator (4,41) from encryption/decryption mode to clear mode.

3. Process according to claim 2, characterised in that the first level (1) of the cryptographic system (100) is operated with the clock signal of the input clock (E) and that a working clock (A) is generated for the second level (2) of the cryptographic system (100) by a logical "AND" combination of the input clock (E) and the control signal (S).

4. Process according to claim 3, characterised in that the input clock signal (E) is chosen to be symmetrical.

5. Process according to claims 2 to 4, characterised in that on the one hand the unchanged data stream (DM) or the unchanged encrypted text stream (SM) is passed on within the first level (1) of the cryptographic system (100) and on the other hand within the second level (2) of the cryptographic system (100) the clear text (KT) or cryptodata (CT) resp. are passed on.

6. Process according to claim 5, characterised in that filtering out of the clear text (KT) from the data stream (DM) or cryptodata (CT) from the encrypted text stream (SM) resp. is effected by operating a flip-flop (10,101) at working clock rate (A), and situated in the second level (2) of the cryptographic system (100).

7. Process according to claim 5 or 6, characterised in that the data stream (DM) or encrypted text stream (SM) resp. is fed though the first level (1) of the cryptographic system (100) at the input clock rate (E).

8. Process according to one of the claims 5 to 7, characterised in that the clear text (KT) or cryptodata (CT) resp. is fed through the second level (2) of the cryptographic system (100) at the rate of the working clock signal (A).

9. Process according to one of the claims 3 to 8, characterised in that the at least one encryption/decryption generator (4,41) is operated at the rate of the working clock (A).

10. Process according to one of the claims 1 to 9, characterised in that the combination of the presented clear text (KT) processed as cryptodata (CT) or the presented cryptodata (CT) as clear text resp. is done with the data transmission protocol (PR) in a 2:1 multiplexer (6,61), which is located within the level (1) of the cryptographic system (100).

11. Process according to claim 10, characterised in that the combination is performed bitwise, and that bit for bit of the clear text (KT) or cryptodata (CT) of the unchanged data stream (DM) or encrypted text stream (SM) is replaced by cryptodata (CT) or clear text (KT) resp.

12. Process according to claim 11, characterised in that the bitwise correct combination of the cryptodata (CT) or clear text (KT) resp. with the data transmission protocols (PR) is done at input clock rate (E) through the operation of a second flip-flop (9,91), which is located in the first level (1) of the cryptographic system (100).

13. Process according to one of the claims 1 to 12, characterised in that the clear text (KT) is replaced by protocol data (XY), for instance key exchange information, from a protocol generator (5,51) which is located in the second level (2) of the cryptographic system (100) and as required can be activated instead of the at least one encryption/decryption generator (4,41), and is operated at the rate of the working clock (A).

14. Process according to one of the preceding claims, characterised in that a self-synchronising process is used for the encryption/decryption.

15. Cryptographic system for the encryption of clear text (KT) or decryption of cryptodata (CT), with a clear text interface (21, 21A) and a cryptodata interface (22, 22A) and at least on encryption/decryption generator (4,41), characterised in that the cryptographic system (100) is designed in two stages, whereby a first level (1) of the cryptographic system (100) contains a frame detection circuit (3,31) and a 2:1 multiplexer unit (6,61), and in a second level (2) of the cryptographic system (100) alongside the at least one encryption/decryption generator (4,41) there is a protocol generator (5) and a protocol receiver (51), which serve for the transfer of protocol data (XY), for instance for key exchange between communicating systems.

16. Cryptographic system according to claim 15, characterised in that in the first level (1) there is an "AND" gate (7,71) which generates a working clock signal (A), which is different from the input clock signal (E), for function elements of the second level (2) of the cryptographic system (100), from an input clock (E) which controls the first level (1) and a control signal (S) generated by the frame detection circuit (3,31).

17. Cryptographic system according to claim 15 or 16, characterised in that in the second level (2) of the cryptographic system (100) there is a first flip-flop (10, 101), which can be operated at the rate of the working clock signal (A).

18. Cryptographic system according to one of the claims 15 to 17, characterised in that in the first level (1) of the cryptographic system (100) there is a second flip-flop (9,91) which can be driven at the rate of the input clock signal (E).

19. Cryptographic system according to one of the claims 15 to 18, characterised in that in the second level (2) of the cryptographic system (100) there is a changeover switch (11), by means of which at choice it is possible to activate either the encryption/decryption generator (4,41) or the protocol generator (5).

20. Cryptographic system according to one of the claims 15 to 19, characterised in that it contains separate encryption (110) and decryption (120) units, with a separate encipherment or decipherment generator (4 or 41 resp.).

## Revendications

1. Procédé de traitement cryptographique de données, dans lequel une quantité de données (DM) contenant du texte en clair (KT) et des protocoles de transmission de données (PR) et respectivement une quantité de texte chiffré (SM) contenant des données cryptées (CT) et des protocoles de transmission de données (PR) sont transmises par paquets à un système cryptographique (100) qui comprend au moins un générateur chiffreur/ déchiffreur (4, 41) et délivre à la sortie des signaux contenant les données cryptées (CT) et respectivement les données en clair (KT), la quantité de texte chiffré et respectivement la quantité de données étant traitées à deux niveaux (1, 2), les données de protocoles de transmission de données (PR) à l'intérieur de la quantité de données (DM) et respectivement de la quantité de texte chiffré (SM) étant détectées au premier niveau (1), caractérisé en ce qu'au premier niveau (1) du système cryptographique (100) synchronisé à la cadence d'entrée E, la quantité de données (DM) et respectivement la quantité de texte chiffré sont transmises à un circuit de reconnaissance de bloc (3) qui, en cas de reconnaissance de protocoles de transmission de données à l'intérieur de la quantité de données (DM) et respectivement de la quantité de texte chiffré, produit à la sortie un signal de commande (S), un nouveau cycle de travail (A) étant généré à partir du signal de commande (S) et du cycle d'entrée (E), qui commande le deuxième niveau (2) du système cryptographique (100) de telle façon que la quantité de données (DM) ou la quantité de texte chiffré ne parviennent au deuxième niveau que lors de la présence de texte en clair (KT) ou de données cryptées, ce qui a pour effet qu'au deuxième niveau (2), seuls le texte en clair (KT) ou les données cryptées (CT) est ou sont traité(es) par au moins un générateur chiffreur/déchiffreur (4), et que, après traitement, le texte en clair (KT) se présentant sous la forme de données cryptées (CT) et respectivement les données cryptées (CT) se présentant sous la forme de texte en clair (KT) sont combinés au cours du cycle d'entrée (E) avec les protocoles de transmission de données (PR) inchangés de telle façon que le système cryptographique (100) produit en tant que signaux de sortie la quantité de texte chiffré (SM), lorsqu'il fonctionne en mode de chiffrage, et la quantité de données (DM) lorsqu'il fonctionne en mode de déchiffrage.

2. Procédé selon la revendication 1, caractérisé en ce que la reconnaissance des protocoles de transmission de données (PR) se fait dans un circuit de reconnaissance de cadre (3, 31), en produisant un signal de commande (S) qui sert à commuter au moins un générateur chiffreur/déchiffreur (4, 41) du mode de chiffrage/déchiffrage sur le mode de texte en clair.

3. Procédé selon la revendication 2, caractérisé en ce que le premier niveau (1) du système cryptographique (100) fonctionne au rythme d'un cycle d'entrée (E) et qu'un cycle de travail (A) pour le deuxième niveau (2) du système cryptographique (100) est réalisé par une opération logique "ET" du cycle d'entrée (E) avec le signal de commande (S).

4. Procédé selon la revendication 3, caractérisé en ce que le cycle d'entrée (E) est choisi de manière symétrique.

5. Procédé selon l'une des revendications 2 à 4, caractérisé en ce que d'une part la quantité de données (DM) inchangée et respectivement la quantité de texte chiffré (SM) inchangée sont transmises à l'intérieur du premier niveau (1) du système cryptographique (100) et que, d'autre part, le texte en clair (KT) et respectivement les données cryptées (CT) sont transmis à l'intérieur du deuxième niveau (2) du système cryptographique (100).

6. Procédé selon la revendication 5, caractérisé en ce que le filtrage du texte en clair (KT) dans la quantité de données (DM) et respectivement des données cryptées (CT) dans la quantité de texte chiffré (SM) se fait par le fonctionnement d'une première bascule bistable (10, 101) durant le cycle de travail (A), qui se situe au deuxième niveau (2) du système cryptographique (100).

7. Procédé selon l'une des revendications 5 ou 6, caractérisé en ce que la quantité de données (DM) et respectivement la quantité de texte chiffré (SM) parcourent le premier niveau (1) du système cryptographique (100) au rythme du cycle d'entrée (E).

8. Procédé selon l'une des revendications 5 à 7, caractérisé en ce que le texte en clair (KT) et respectivement les données cryptées (CT) parcourent le deuxième niveau (2) du système cryptographique (100) au rythme du cycle de travail (A).

9. Procédé selon l'une des revendications 3 à 8, caractérisé en ce qu'au moins un générateur chiffreur/déchiffreur (4, 41) fonctionne au rythme du cycle de travail (A).

10. Procédé selon l'une des revendications 1 à 9, caractérisé en ce que la combinaison du texte en clair (KT) se présentant après le traitement sous la forme de données cryptées (CT) ou des données cryptées (CT) se présentant après le traitement sous la forme de texte en clair (KT), avec les protocoles de transmission de données (PR) est réalisée dans une unité de multiplexage 2:1 (6, 61) prévue au premier niveau (1) du système cryptographique (100).

11. Procédé selon la revendication 10, caractérisé en ce que la combinaison se fait par bits et que le texte en clair (KT) ou les données cryptées (CT) de la quantité de données (DM) inchangée ou de la quantité de texte chiffré (SM) inchangée sont remplacés bit par bit par des données cryptées (CT) et respectivement par du texte en clair (KT).

12. Procédé selon la revendication 11, caractérisé en ce que la combinaison bit par bit correcte des données cryptées (CT) ou du texte en clair (KT) avec les protocoles de transmission de données (PR) est réalisée par l'activation au rythme du cycle d'entrée (E) d'une seconde bascule bistable (9, 91) située au premier niveau (1) du système cryptographique (100).

13. Procédé selon l'une des revendications 1 à 12, caractérisé en ce que le texte en clair (KT) est remplacé par des données de protocole (XY), par exemple des informations d'échange codées, d'un générateur de protocoles (5, 51) qui est situé au deuxième niveau (2) du système cryptographique (100) et peut être activé en cas de besoin à la place d'au moins un générateur chiffreur/déchiffreur (4, 41) et qui fonctionne au rythme du cycle de travail (A).

14. Procédé selon l'une des revendications précédentes, caractérisé en ce qu'un procédé à synchronisation automatique est appliqué pour le chiffrage et respectivement le déchiffrage.

15. Système cryptographique pour le chiffrage de texte en clair (KT) et respectivement pour le déchiffrage de données cryptées (CT), comprenant une interface de texte en clair (21, 21A) et une interface de données cryptées (22, 22A) et au moins un générateur chiffreur/déchiffreur (4, 41), caractérisé en ce que le système cryptographique (100) est à deux étages, un premier niveau (1) dudit système cryptographique (100) comprenant un circuit de reconnaissance de bloc (3, 31) et une unité de multiplexage 2:1 (6, 61), et le deuxième niveau (2) du système cryptographique (100) comprenant, en plus d'au moins un générateur chiffreur/déchiffreur (4, 41), un générateur de protocoles (5) et un récepteur de protocoles (51) qui servent à la transmission des données de protocoles (XY), par exemple à l'échange de codes, entre les systèmes communicants.

16. Système cryptographique selon la revendication 15, caractérisé en ce que le premier niveau (1) comprend un circuit logique "ET" (7, 71) qui, à partir d'un cycle d'entrée (E) déterminant pour le premier niveau (1) et d'un signal de commande (S) généré par le circuit de reconnaissance de bloc (3, 31), produit un cycle de travail (A) pour les éléments fonctionnels du deuxième niveau (2) du système cryptographique (100), qui diffère du cycle d'entrée (E).

17. Système cryptographique selon l'une des revendications 15 ou 16, caractérisé en ce que le deuxième niveau (2) du système cryptographique (100) comprend une première bascule bistable (10, 101) qui peut fonctionner au rythme du cycle de travail (A).

18. Système cryptographique selon l'une des revendications 15 à 17, caractérisé en ce que le premier niveau (1) du système cryptographique (100) comprend une seconde bascule bistable (9, 91) qui peut fonctionner au rythme du cycle d'entrée (E).

19. Système cryptographique selon l'une des revendications 15 à 18, caractérisé en ce que le deuxième niveau (2) du système cryptographique (100) comprend un commutateur (11) qui permet d'activer, au choix, le générateur chiffreur/déchiffreur (4, 41) ou le générateur de protocoles (5).

20. Système cryptographique selon l'une des revendications 15 à 19, caractérisé en ce qu'il comprend des unités de chiffrage (110) et de déchiffrage (120) séparées, avec un générateur chiffreur et respectivement déchiffreur (4 et respectivement 41) séparé.
